(19) Europäisches Patentamt
European Patent Office
Office européen des brevets

(11) EP 0 779 597 A1

(12) EUROPEAN PATENT APPLICATION

(43) Date of publication:
18.06.1997 Bulletin 1997/25

(51) Int. Cl.$^6$: G06K 17/00, G06K 7/015

(21) Application number: 95600011.1

(22) Date of filing: 11.12.1995

(84) Designated Contracting States:
AT BE CH DE DK ES FR GB IE IT LI LU MC NL PT SE

(71) Applicants:
• Maniorakis, Mixalis
  Heraklio Kritis 71000 (GR)
• Alithinos, Eyaggelos
  Heraklio Kritis 71303 (GR)

(72) Inventors:
• Maniorakis, Mixalis
  Heraklio Kritis 71000 (GR)
• Alithinos, Eyaggelos
  Heraklio Kritis 71303 (GR)

Remarks:
A request for correction of the description and claim 2 has been filed pursuant to Rule 88 EPC. A decision on the request will be taken during the proceedings before the Examining Division (Guidelines for Examination in the EPO, A-V, 3.).

(54) **Optical mark-reading for coded evaluation scales**

(57) A method for grade coding and a scanning apparatus for the automatic input of grades and absences into a computer, with specially designed printed sheets,grade registers and absence sheets which are filled in by the teachers. The printed sheets include the names of the students printed in a column and a number of positions with the printing of ASCII characters is also included next to each name. The meaning or the value of each position is known to the teacher who selects and marks the appropriate positions so as to represent the desirable state of progress or absences.The markings on the filled printed sheets are detectable by an optical scanning apparatus, especially designed to cooperate with photocopies of the printed sheets which differ from one another as far as the contrast and the printing position are concerned. The derived data is driven to a computer equipped with a programme which processes their reception, storage and correlation, facilitating the school's administration.

FIGUR 7.

EP 0 779 597 A1

## Description

The invention is placed among the family of optical mark-readers,that is, devices which have the ability to read data, using optical methods, from strictly fixed printed sheets, to transform them into electrical signal codes, so that this data can be fed into communication systems or be processed by a computer.

Optical mark-readers are for specialised applications since they are combined only with the printed sheets they have been designed for.

As the automatic derivation of information from a handwritten paper is impossible with the existing technology,when there are reasons for the automation of this procedure,a communication protocol in code form is established, accessible to man and at the same time identifiable by the optical reader. It is obvious that the selection of the code precedes the design of the device.

Some well-known optical mark-readers are the LOTTO machine, the machine for processing multiple-choice type examination papers (mark readers) and the Bar Code Readers.

In the field of education, where the invention refers to,no such system has been applied yet,although the needs are pressing and therefore the invention appears to be an innovation.

The invention makes the process of school grading and absence registration automatic,and this data can therefore be fed into a computer quickly and safely without the time-consuming and unsafe procedure through keyboard.

The invention is a part of a more general system of which the components are:

A.Method of school grading and absence coding.

A main criterion for the choice of this particular coding method, amongst a lot of suitable ones,is the fact that it is derived simply and reasonably from the decimal system of numeration and therefore it is friendly to the teachers who will be asked to use it.

It consists of the determination on a printed sheet of a number of positions by printing figures or characters in alignment, preferably of the ASCII total. The number and the meaning attached to these positions vary according to the representation requirements of scales 1-10, 1-20, 1-100 or of absences.

However, in each and every case their meaning is known to the teacher who chooses the desirable situation by marking on the printed characters. From now on this part of the system will be referred to as P-codes (Position Codes) and each case is described below in detail.

B.Forms which are used.

They are of two types:

a. Collective grading registers of each class and b, Daily attendance registers of each class.The printed sheets are printed using a printer preferably on A4 paper, then are reproduced with the help of a photocopier and have on them the names of the students of each class in a column. Next to each name the positions of the appropriate P-code and two more characters preferably the (179) (vertical line) and the (220) (black square) of ASCII are printed. The totals of these characters, printed one below the other also create position columns. Each printed sheet also has printed characters at the top, from which the class and the subject are identified, being in positions coinciding with the previous character columns.

Samples of such printed sheets are submitted together.

C.Optical mark-reader.

It is the apparatus which scans the described printed sheets.A mark-reader type apparatus is preferably used (even though the use of a picture scanner-type apparatus is possible) so as to avoid the transmission of unnecessary information to the computer along with the data, the storing and the distinguishing of which require memory space and time. In this application a mark reader type apparatus has been specially designed to co-operate with the original printed sheets as well as with their photocopies,which have serious deviations among them as far as the printing positions and the contrast are concerned.

This flexibility (which is not common in the specifications of such devices) is due to the established automatic controls of the apparatus which enable it to "sense" the imperfections (as far as the printing position and the contrast are concerned) which the sheets of the photocopies inevitably have and to adjust itself with the help of the printed in column (179), (220) ASCII characters.

From now on, it will be referred to as "apparatus".

D. The computer and the printer.

A computer is the receiver of the output data of the device mentioned above. The demands of the system are completely covered by all compatible PCs with 1 MB RAM, 1 HD and 1 FD, the memory size of which depends partly on the size of the school unit. An 80 column-printer is appropriate for all basic functions.

E. The programme.

It ensures the communication of the computer with the apparatus while it simultaneously checks the reliability of the input data and it notifies in case of error.

The data input is done to the whole of the students of a class, and they are registered in appropriate files in the order they are received so that each student corresponds to his/her grade.

It also has the ability to do the following: management of current and background files of students, absences and grades, printing a series of printed sheets with the above mentioned data, processing of the school results updating the corresponding file, giving out statistical information concerning the students, producing the printed sheets which the reading apparatus uses, and updating by the user every change of the school laws in force.

F. The photocopier.

It is an essential supplement of the system for the reproduction of the pre-printed grading lists and attendance register sheets.

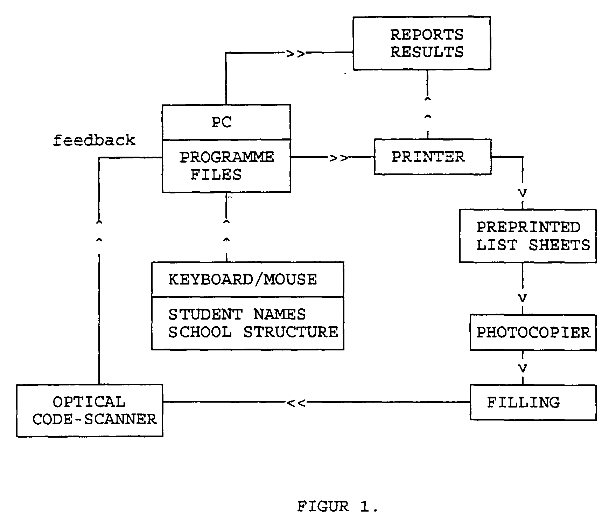

A diagram of the information flow in the various parts of the system is presented in figure 1.

The advantages of the device are:

In full operation the system reacts as a reliable, rapid and inexpensive secretary. The teaching staff is released from most of the time-consuming non-teaching work. The time which is gained is valuable for the teaching task of the educator. The mistakes which are often made during the grading registration or the making out of results and are due to the human factor, are avoided.

The cost of the apparatus when massed produced will be limited. What should be also considered as a serious advantage, is the fact that the printed sheets which are used, are produced and reproduced by the system without a printing-shop's service.

The scanning time of the sheet of paper, data control and their record registration is less than 3 sec. This great speed and the simplicity of its use (no special training is required by the user) are included in its advantages.

P-CODES

The coding of the evaluation scale 1-20 requires 11 positions with a predetermined unit value each, and more specifically the following ones: 10,1,2,3,...,10 or 20. The representation of the evaluation scale 1-20 is possible with the marking of specific positions, as it is clear in the example below:

| No | Name | Position values | | | | | | | | | | | Grade |
|---|---|---|---|---|---|---|---|---|---|---|---|---|---|
| | | 10 | 1 | 2 | 3 | 4 | 5 | 6 | 7 | 8 | 9 | 10 | |
| 1. | Petihakis M. | * | . | . | . | . | . | * | . | . | . | . | 16 |
| 2. | Atihakis A. | . | . | . | . | . | . | . | . | . | * | . | 09 |
| 3. | Aristaki D. | * | . | . | . | . | . | . | . | . | . | * | 20 |

For each grade from one (1) to nine (9), one of the positions is just marked with the corresponding value. For grade ten (10) the first position with value ten is marked. For grades eleven (11) to twenty (20) the first position which has value ten is marked, as well as one of the next positions, the value of which corresponds to the rest of the units (Claim 3).

Using the same system, the construction of a code for the automatic absence registration is possible. All we have to do is to replace value (10) which lies on the first position into a two value quality variable (Justified-Truancy, J-T). The number of absences marked on the remaining section of the code will be considered as justified if this position is marked.

According to the teaching hours, it is possible for the positions of this section of the code to be limited to 7 or 6 (Claim 5). An equally usable number of 11 positions for the representation of the 1-20 scale is created with the attribution of the meanings of the figures 1,1,2,3,4,5,6,7,8,9,0 to them, not necessarily in this order, capable of representing the 1-20 scale through the marking of one or two positions.

It is possible to have an extension to the evaluation scale up to 100 (claim 4), adding a 12th position to the previous code. The new number of the positions is exploited as follows: the meaning of figures 0,1,2,3,...,9 is attributed to ten of them, the marking of which represents the one-figured grades.

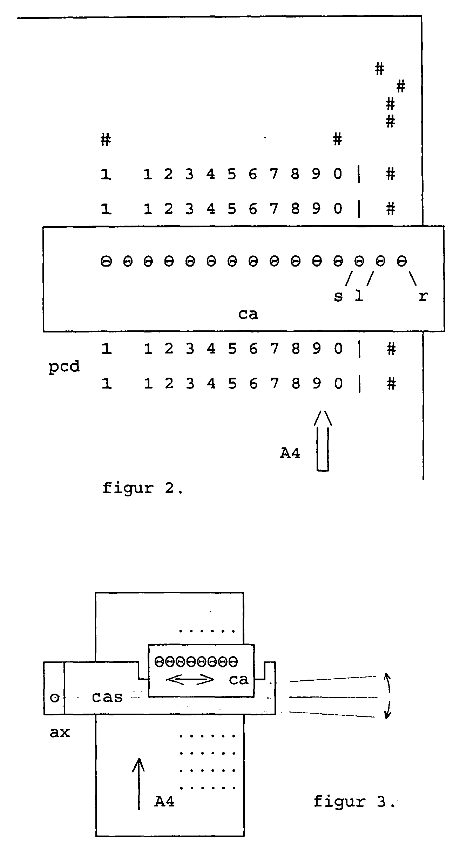

To the remaining two positions, the meanings Repetition and Swap are respectively given and are made known to the user preferably by the characters R and S. For the representation of two-figured grades with two same figures (11,22,...,99) we can mark the corresponding figure 1,2,...,9 and the repetition position. For the rest of the 2-figured grades, we mark two of the figures 0,1,2,...,9. If they appear in the 2-figured grade in an opposite order from the marked positions, we mark the swap position as well.Grade 100 is represented by marking 0 and the repetition position or by another suitable combination.

There's a relevant example below:

| No | Name | Position meanings | | | | | | | | | | | | Grade |
|----|------|---|---|---|---|---|---|---|---|---|---|---|---|-------|
| | | R | S | 1 | 2 | 3 | 4 | 5 | 6 | 7 | 8 | 9 | 0 | |
| 1. | Petihakis M. | * | . | . | . | . | . | . | * | . | . | . | . | 66 |
| 2. | Atihakis A. | . | . | . | . | . | . | . | * | . | . | . | . | 06 |
| 3. | Theodorakis.M | . | . | * | * | . | . | . | . | . | . | . | . | 12 |
| 4. | Xatzidakis E. | . | * | * | * | . | . | . | . | . | . | . | . | 21 |
| 5. | Aristaki D. | . | . | . | . | . | . | . | . | * | * | . | . | 78 |
| 6. | Kaloudakis M. | . | * | . | . | * | . | . | . | . | * | . | . | 83 |
| 7. | Ekatostaki E. | * | . | . | . | . | . | . | . | . | . | . | * | 100 |

The representation of this scale is also possible with the use of 19 positions with the meanings of the figures 1,2,3,4,5,6,7,8,9 and 1,2,3,4,5,6,7,8,9,0. Nine of these positions are used for the representation of the tens and the rest of them for the representation of the units.

THE APPARATUS

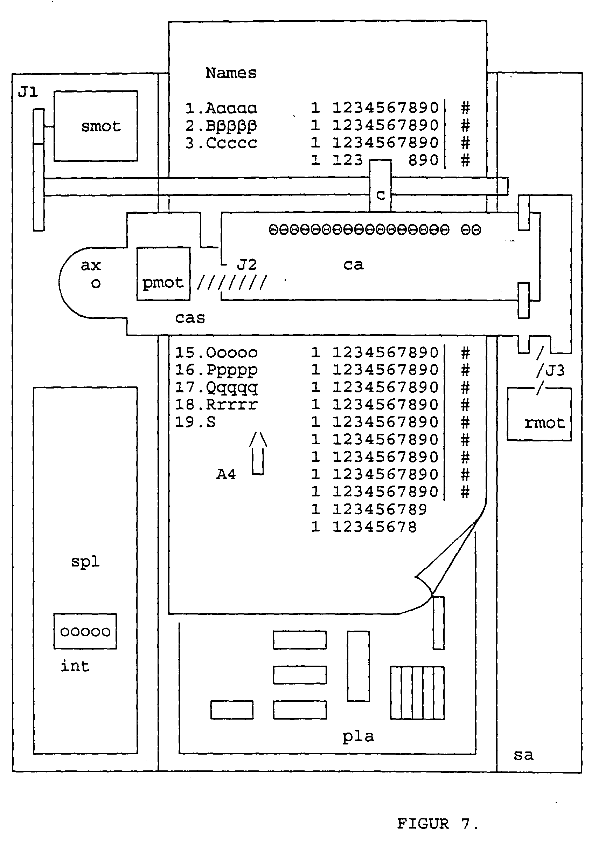

The basic parts of the apparatus (figure 7,sectional view ) are:

a. A mark-reading cartridge (ca, figures 2,5,7). It is a rectangular plate of copper-plated bakelite, equipped with sensors sensitive to light (Θ) in a linear order, corresponding to the number and the distance of the positions of the P-codes on the printed sheets.These sensors will be referred to as data sensors from now on. The order is completed by three more sensors (s,l,r) to detect the characters (179), (220) and will be referred to as control sensors from now on. Sensors which are preferably used,have in the same casing a coupling of a transmitter and a receiver suitably positioned to react to the reflecting light from a third object.

The receiver and transmitter should preferably operate in the infra-red so as to avoid influence from the external light. In the opposite case a protective shell is required. Crucial for the reliability of the apparatus is the characteristics' uniformity of the sensor.

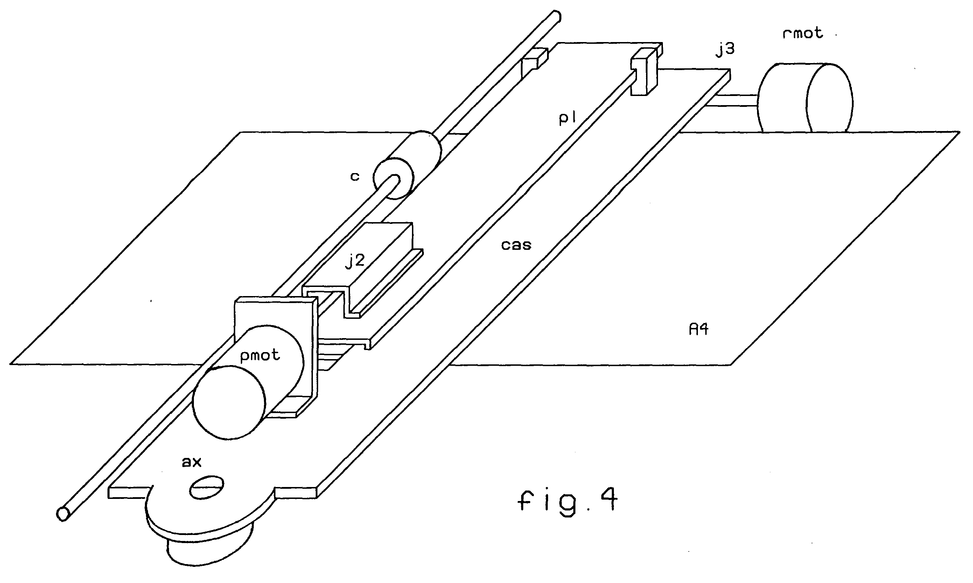

In figure 2, (scale 1:1) the corresponding of the sensors to the P-code positions of the printed A4 sheet is shown, which is moved forward towards the direction of its long dimension and is always adjacent to the cartridge.The forward movement of the printed sheet is accomplished with adjacent and conversely rotating cylinders (c, fig.4,7) the pivots of which are connected (J1, fig. 7) to a motor (smot). This motor is activated as soon as the (s) sensor detects a sheet of paper. However, the photocopies of the printed sheets show two kinds of deviation as far as the printing position is concerned: a shifting of the printed part to the right or left and a turning of it to the right or left.

In order for the cartridge to adjust to the particularities of each printed sheet, it is placed on a mechanism which enables it to move in two ways on the level of the A4 sheet, as it is shown by the arrows in figure 3 : +10mm shifting as far as the direction of the small dimension (horizontal) is concerned of the A4 printed sheet and at least +3 turning as far as the same direction is concerned (Claim 2).

b.Cartridge support mechanism (figures 4,3).

The cartridge is placed on a metalic rectangular plate (pl) with guides which enable it to slide along its big dimension. This movement is controlled by a servo-motor (pmot) connected (J2) with the plate. The cartridge-plate-motor cluster is based on a metalic carrier (cas) equipped with an axis (ax) vertical to the A4 sheet level, which enables a +3 turn. This movement is controlled by a second servo-motor (rmot) connected (J3) to the carrier. Step or analogue motors equally meet the demands of the system adequately.

c.Electronic part.

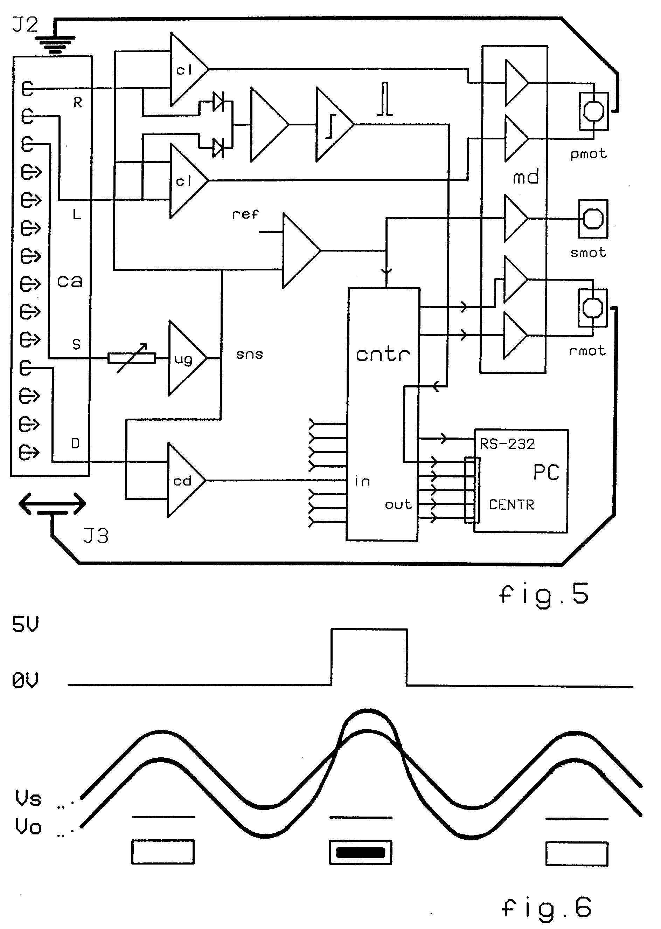

The analogic signals,which are produced at the output of the sensor data, are sent to be digitalised as equivalent comparators (cd) with a common comparison level (block diagram, fig. 5). This common comparison level comes from the control sensor (s) through a unit gain amplifier (ug). Because the sensor (s) detects the column which character (179) creates, the level (Vs, fig.6) at its output changes according to the successive detection of white space and black character almost sinuously.

The peaks of this signal which correspond to the level of the black due to connecting are analogous to the printing contrast. The voltage shift (Vo) at the output of each data sensor is of analogous form and same phase due to the detection of the pre-printed characters.

The Vs is regulated so as it is Vs-Vo=0.4 Volts, upon which the scanning sensitivity depends (sns). This differential remains almost stable regardless of printing contrast or thermal variation of the sensors. But if one data sensor detects a mark on a character, then there is Vo>Vs, and a temporary 5V upsetting is caused at the output of the corresponding comparator which corresponds to the logical state 1. The comparator outputs are driven to a programmable controller ((8 bits) x 4(I/0)port) which stores the data of each line temporarily and releases it to the RS-232 port or the CENTRONIC port of the computer according to the timing base of the circuit which is presented further on. The alignment of the cartridge to the columns of the printed sheet is accomplished with the (l,r) sensors which are adjacent, to the right and left, of the column of characters (220), which are represented in figure 2 with character (#) (Claim 2).

A balanced state of the cartridge is accomplished when the output levels of the two sensors are equal. Every deviation from this state activates the corresponding comparator (cl) and through a driving circuit, also activates the motor of the cartridge position (pmot). The latter, turning to the right or left, brings the cartridge back to balance.

Concurrently with the alignment function of the cartridge, the (l,r) sensors produce the timing basis of the circuits since the simultaneous detection of character (220) produces signals of the same phase at their outputs, the frequency of which depends on the forward movement speed of the printed sheet.The average signal rate is led successively to amplification, squaring, differantiation and Schmitt-trigger stages. The latter produces one pulse per line, of 5V amplitude and 2 ms duration.

The alignment of the cartridge with the printed lines of the sheet is accomplished with the detection of two characters (220), printed before the data lines, in the same line, (fig. 2),(Claim 2), by the two end (first and last) data sensors. These characters are detected after the cartridge alignment process to the columns is completed.

A criterion for measuring the printing rotation angle ($\varphi$) is the timing change difference ($\Delta t$) to the corresponding comparators in relation to the forward movement speed of the printed sheet, according to the function:

$$\varphi = arc\ (sin(n^*T^*v/d)) <=> n=d^*sin(\varphi)/(T^*v)\ ,\ (when\ \varphi\ <5\ )$$

where $n^*T=\Delta t$, T is the clock period of the controller, n is the number of the periods, d is the sensor distance and v is the forward movement speed of the printed sheet.

The number (s) of the motor steps which controls the cartridge rotation is a linear function of n ($s=J^*n$), where J is a constant depending on the connection mechanism (J3).The number (s) of the steps and their execution direction are computed by the program-mable controller, as soon as the alignment process to the columns of the printed sheet is completed.

The non-installation of one or more described automations of position control or sensitivity, restricts the ability of the apparatus to co-operate with a variety of printings. The cartridge rotation mechanism especially, can be omitted without influencing the reliability of the apparatus as long as the horizontal lines are not in dense positioning and the printing rotation is reduced. The whole of these circuits is established on a printed circuit card (pla, fig.7).

d.Power supply (spl) and function indicators (int),(fig. 7).

The supply gives out regulated voltages of 5,6 and 9V for the needs of the electrical and electronic parts of the apparatus and the indicators show the function stage in which the apparatus is each time.

## Claims

1. A method and a device for optical reading of collective oral or written student grading registers and of daily absence sheets, for the automatic grade and absence input into a computer so as to avoid the use of the keyboard,which is characterised by the use of preferably A4 sheets, or photocopied copies of them which have the names of the students printed in a column and a number of positions (depending on the use of the printed sheet) next to each name, which are noted to the teacher by the printing of preferably ASCII characters or other figures, who then fills the appropriate positions by marking on the characters, representing in this way the student's progress and the number or type of absences.

2. An apparatus equipped with a cartridge which detects the marking on the printed sheets of Claim 1, specified by the installation of the detection cartridge on a mechanism which enables it to move for at least +10 mm towards the direction of the small sheet dimension and to rotate for at least +3 towards the same direction.

3. A method, according to Claim 1, for the representation of the 1-20 evaluation scale, specified by the marking of at least 11 positions to which the values 10,1,2,3,4,5,6,7,8,9,10 or 20 are attributed or the meanings of the figures 1,1,2,3,4,5,6,7,8,9,0 are attributed.

4. A method, according to Claim 1, for the representation of the 1-100 scale, which requires at least 12 positions, to two of which the meanings repetition-swap are attributed and to the rest of them the meanings of the figures 1,2,3,4,5,6,7,8,9,0 or at least 19 positions with the meanings of the tens to 9 of them and the meanings of the units to the remaining 10.

5. A method, according to Claim 1, for the representation of the number and type of daily absences, which requires positions equal in number to the number of the daily teaching hours and one or more positions for the determination of the type of absences.

6. An apparatus equipped with a cartridge detecting the markings on the printed sheets of Claim 1, characterised by the installation of a sensor on the cartridge which detects a pre-printed character column and gives out for each character an output level corresponding to its printing contrast which regulates the sensitivity of the apparatus.

FIGUR 1.

```
                                                        #
                                                          #
                                                        #
                                                        #

            #                              #

            1    1 2 3 4 5 6 7 8 9 0 |     #

            1    1 2 3 4 5 6 7 8 9 0 |     #

     ┌──────────────────────────────────────────────────┐
     │        ⊖ ⊖ ⊖ ⊖ ⊖ ⊖ ⊖ ⊖ ⊖ ⊖ ⊖ ⊖ ⊖ ⊖ ⊖           │
     │                                    / /    \        │
     │                                   s l       r     │
     │                    ca                             │
     └──────────────────────────────────────────────────┘
            1    1 2 3 4 5 6 7 8 9 0 |     #
     pcd
            1    1 2 3 4 5 6 7 8 9 0 |     #

                                    /\
                                    ||
                        A4          ||
```

figur 2.

figur 3.

fig.4

fig.5

fig.6

FIGUR 7.

**European Patent Office**

## EUROPEAN SEARCH REPORT

Application Number

EP 95 60 0011

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 760 246 (SHEPARD) 26 July 1988 | 1,3-5 | G06K17/00 |
| Y | * column 3, line 14 - column 4, line 27 * | 6 | G06K7/015 |
| Y | PATENT ABSTRACTS OF JAPAN vol. 14, no. 584 (E-1018), 27 December 1990 & JP-A-02 254851 (CANON INC), 15 October 1990, * abstract * | 6 | |
| A | US-A-4 833 591 (ECKL) 23 May 1989 * claim 1; figure 1 * | 2 | |
| A | GB-A-2 159 993 (DREXLER TECHNOLOGY CORPORATION) 11 December 1985 * column 4, line 21 - line 62; claims 1,8; figures 6,7 * | 2 | |
| A | GB-A-2 188 475 (KABUSHIKI KAISHA TOSHIBA) 30 September 1987 * abstract * | 2 | |

TECHNICAL FIELDS SEARCHED (Int.Cl.6)

G06K

The present search report has been drawn up for all claims

| Place of search | Date of completion of the search | Examiner |
|---|---|---|
| THE HAGUE | 31 May 1996 | Chiarizia, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)